# EUROPÄISCHE PATENTSCHRIFT

(11) **EP 1 464 474 B1**
(45) Veröffentlichungstag und Bekanntmachung des Hinweises auf die Patenterteilung: **18.11.2009**
(21) Anmeldenummer: 04007041.9
(22) Anmeldetag: 24.03.2004
(51) Int. Cl.: B31B 1/84, B65B 61/18

(54) **Verfahren und Vorrichtung zum Applizieren von Ausgiesselementen an Packungen**
Method and device for applying dispensing elements onto packages
Procédé et dispositif d'application de becs verseurs à des emballages

(30) Priorität: 25.03.2003 DE 10313244
(43) Veröffentlichungstag der Anmeldung: 06.10.2004
(73) Patentinhaber: SIG Technology AG, 8212 Neuhausen am Rheinfall (CH)
(72) Erfinder: Baltes, Klaus, 50127 Bergheim (DE)
(74) Vertreter: Cohausz & Florack

(56) Entgegenhaltungen:
- EP-A- 1 291 162
- DE-U1- 7 833 456

## Beschreibung

Die Erfindung betrifft ein Verfahren und eine Vorrichtung zum Applizieren von Ausgießelementen an Packungen, insbesondere an quaderförmigen Mehrschichtverbundpackungen für Flüssigkeiten, wobei flachgefaltete Packungsmäntel vereinzelt, ggf. vorgefaltet und zu jeweils einem rechteckigen Schlauch aufgefaltet werden, wobei im Kopfbereich der späteren Packung jeweils eine Öffnung zur Aufnahme eines Ausgießelementes in die aufgefalteten Schläuche gestanzt und jeder Schlauch mit einem Ausgießelement versehen wird und wobei anschließend der Packungsboden hergestellt wird und abschließend das Füllen sowie Verschließen der fertigen Packung erfolgt sowie eine so hergestellte Packung.

Als Mehrschichtverbundpackungen ausgebildete Getränkepackungen sind in vielfacher Ausfertigung bekannt, beispielsweise als Flachgiebelverbundpackungen. Sie finden vornehmlich auf dem Gebiet der Flüssigkeitsverpackung im Zusammenhang mit Kalt-, Kalt-Steril-, Heiß- und aseptischer Füllung Verwendung.

Solche Packungen werden heute häufig mit wiederverschließbaren Ausgießelementen versehen, um einerseits die erstmalige Öffnung der Packung ohne Zuhilfenahme von Werkzeugen zu erleichtern und andererseits zum sicheren Wiederverschließen, damit das in der Packung befindliche Produkt seine Qualitätseigenschaften wie Geschmack, Vitamine etc. bis zum endgültigen Leeren behält.

Insbesondere sind Packungen bekannt, die mit Ausgießelementen versehen sind, welche durch eine Öffnung im Kopfbereich der Mehrschichtverbundpackung gebracht wird und dort, meist mit einem mit der Innenwandung zu verbindenden Flansch, befestigt werden (EP-A2-1 291 162). Gerade bei den vorgenannten Packungen ist es problematisch, die Applikation des Ausgießelementes erst nach der Füllung der Packung durchzuführen, da hier hygienische Beeinträchtigungen des Produktes und/oder der Packung bzw. des einzubringenden Ausgießers aufgrund unzureichender Verschweißung des Flansches mit vom Produkt benetzten Mehrschichtverbundmaterial zu befürchten sind.

Aus der DE 102 20 058 A1 sind ferner ein Verfahren und eine Vorrichtung zum Applizieren von Ausgießelementen an Packungen bekannt, in denen flachgefaltete Packungsmäntel vereinzelt und zu einem rechteckigen Schlauch aufgefaltet werden. Dieser Schlauch wird dann zunächst in eine Stanzstation transportiert, in der eine Öffnung zur Aufnahme des Ausgießelementes in den Schlauch gestanzt wird. Anschließend erfolgt der Transport des Schlauches in eine Station zum Applizieren von Ausgießelementen in die zuvor hergestellten Öffnungen. Von dort wird der mit dem Ausgießelement versehene Schlauch an nachgeordnete Stationen zum Herstellen des Packungsbodens und Füllen sowie Verschließen der fertigen Packung weitergegeben. Diese bekannte Konstruktion sieht eine drehbare Transporteinrichtung vor, auf der jeweils eine Mehrzahl von Packungen zunächst der Stanzstation und anschließend der Applikationsstation bzw. noch weiteren Stationen zugeführt werden. Der Nachteil an dieser konstruktiven Ausgestaltung ist darin zu sehen, dass eine solche Vorrichtung relativ groß baut und dass es daher nur mit sehr hohem Aufwand möglich ist, mehrere parallel angeordnete Fertigungslinien vorzusehen.

Die Erfindung liegt daher die Aufgabe zugrunde, das bekannte und zuvor näher beschriebene Verfahren bzw. die zugehörige Vorrichtung so auszugestalten und weiterzubilden, dass bei konstruktiv geringerem Aufwand die Applikation von Ausgießelementen vereinfacht wird. Darüber hinaus ist eine raumsparende Lösung erwünscht, so dass sich mehrere Fertigungslinien auch gut nebeneinander anordnen lassen.

Diese Aufgabe wird bei einem Verfahren gemäß dem Oberbegriff von Anspruch 1 durch die folgenden Schritte gelöst:
- Auffalten des Packungsmantels zu einem Schlauch,
- Übergabe eines Ausgießelementes an eine Zuführeinrichtung,
- horizontales Verfahren der Zuführeinrichtung unter den Schlauch,
- Absenken des Schlauches um die Zuführeinrichtung herum,
- Ausstanzen einer Öffnung für das Ausgießelement durch horizontales Verfahren eines ein Stanzwerkzeug und ein Schweißwerkzeug aufweisenden Schlittens,
- Anheben des Schlauches, bis die Stanzöffnung sich in Höhe des von der Zuführeinrichtung aufgenommenen Ausgießelementes befindet,
- Applizieren des Ausgießelementes durch erneutes horizontales Verfahren des Schweißwerkzeuges und
- Übergabe des mit Ausgießelement versehenen Schlauches an ein Dornrad.

Vorrichtungsmäßig erfolgt die Lösung der Aufgabe durch eine kombinierte Stanz- und Applikationseinheit gemäß Anspruch 7, bei der sowohl das Stanzwerkzeug als auch das Schweißwerkzeug der Schweißeinrichtung auf einem gemeinsamen Schlitten angeordnet sind und durch eine Zuführeinrichtung für das Ausgießelement, welches auf einem Träger angeordnet ist.

Die Erfindung hat erkannt, dass es möglich ist, die beiden Vorgänge des Stanzens und Applizierens des Ausgießelementes in einer einzigen Station durchführen zu können, wobei - aufgrund der klein bauenden Ausführung - ein modulartiges Aneinanderreihen mehrerer Vorrichtungen zum Anordnen mehrerer paralleler Fertigungslinien möglich ist. Auf diese Weise kann der bekannte Aufbau eines "Längsläufers" beibehalten werden.

Gemäß der Erfindung wird jeder Schlauch in Richtung seiner Längsachse zunächst in die Stanzposition und anschließend in die Applikationsposition bewegt. Auf diese Weise werden die bewegten Massen verglichen mit der gattungsgemäßen Vorrichtung deutlich reduziert.

Nach einer weiteren Ausgestaltung der Erfindung werden die flachgefalteten Schläuche mit nach unten weisendem Kopfbereich zugeführt. Diese hat den Vorteil, dass die Applikation des Ausgießelementes im unteren Bereich des Schlauches stattfinden kann, und dass die dazu notwendigen Aggregate nicht von der Anwesenheit des Schlauches behindert werden.

Eine andere erfindungsgemäße Ausgestaltung der Erfindung sieht vor, dass die Ausgießelemente taktweise über eine Zuführschiene und ein Klemmelement an die Zuführeinrichtung übergeben werden. Dies erleichtert eine besonders günstige Zuführung von Ausgießelementen.

Eine weitere Lehre der Erfindung sieht vor, dass die mit dem Ausgießelement versehenen Schläuche mit ihrem Kopfbereich voran an ein Dornrad zur Herstellung des Packungsbodens übergeben werden. Durch diese Maßnahme kann eine unmittelbare Übergabe an eine nachgeschaltete Station erfolgen, ohne dass, wie beim gattungsbildenden Stand der Technik, die mit dem Ausgießelement versehenen Schläuche noch einmal um 180° gedreht werden müssen.

Bevorzugt werden als Schweißverfahren entweder das Ultraschallschweißen oder das Hochfrequenzschweißen eingesetzt.

Gemäß einer weiteren zweckmäßigen Ausgestaltung der Erfindung ist der Schlitten des Stanzwerkzeuges und/oder der Träger für die Zuführeinrichtung der Schweißeinrichtung horizontal verfahrbar. Durch diese konstruktive Maßnahme ist sichergestellt, dass ein einziger Antrieb für den Stanzbetrieb und für das anschließende Verschweißen des Ausgießelementes ausreichend ist, wobei für jeden zugeführten Schlauch ein zweimaliger Hub dieser Einheit notwendig ist.

Eine weitere Lehre der Erfindung sieht vor, dass die Zuführeinrichtung für das Ausgießelement gleichzeitig als Gegenwerkzeug sowohl für die Schweißeinrichtung als auch für das Stanzwerkzeug ausgebildet ist. Besonders zweckmäßig ist es, wenn die Zuführeinrichtung für das Ausgießelement und die Matrize für das Stanzwerkzeug einstückig mit dem gemeinsamen Träger verbunden sind. Dadurch wird erreicht, dass der zurückzulegende Weg des Schlauches von der Stanzposition in die Applikationsposition äußerst klein gehalten werden kann.

Nach einer weiteren Ausgestaltung der Erfindung sind der Schlitten und der Träger auf einer gemeinsamen Schiene verfahrbar angeordnet. Auf diese Weise ist mit geringem konstruktiven Aufwand sichergestellt, dass der zu bearbeitende Packungsschlauch nur in seiner Längsrichtung bewegt werden muss. Das Durchstecken des Ausgießelementes vor dem Schweißvorgang erfolgt durch eine lineare Bewegung des Trägers quer zur Längsrichtung des Schlauches.

Durch den Wegfall der drehbaren Transporteinrichtung gemäß der gattungsgemäßen Vorrichtung entfällt auch die Möglichkeit, innerhalb dieser Vorrichtung eine Station zum Ausschleusen nicht oder nicht ordnungsgemäß mit einem Ausgießelement versehener Schläuche vorzusehen. Eine solche Möglichkeit ist jedoch für die erfindungsgemäße Vorrichtung wesentlich, da eine Fehlfunktion beim Applizieren von Ausgießelementen niemals vollständig ausgeschlossen werden kann.

Um nun zu vermeiden, dass eine solche Fehlfunktion erst im späteren Verlauf beim oder gar nach dem Füllen detektiert wird, ist vorgesehen, dass eine Station des Dornrades zum Ausschleusen nicht oder nicht ordnungsgemäß mit einem Ausgießelement versehener Schläuche vorgesehen ist. Da die für die in Rede stehenden Packungen verwendeten Dornräder stets wenigstens sechs Dorne aufweisen, ist das Vorsehen einer solchen frühzeitigen Möglichkeit der Ausschleusung konstruktiv ohne weiteres realisierbar.

Eine nach dem erfindungsgemäßen Verfahren gefertigte Packung zeichnet sich dadurch aus, dass das Ausgießelement derart an der Innenseite des Schlauches appliziert ist, dass der Flansch des Ausgießelementes im vollfähig mit der Innenwandung des Schlauches verschweißt ist. Auf diese Weise ist es sichergestellt, dass die offene Kante des Verbundmaterials im Bereich der Stanzöffnung durch den vollflächig aufgeschweißten Flansch des Ausgießelementes nicht mit dem in der Packung befindlichen Produkt in Kontakt treten kann. Eine aufwendige Behandlung dieser offenen Kante kann also entfallen.

Die so hergestellte Packung hat darüber hinaus den Vorteil, dass etwaiger beim Stanzen entstehender Abrieb des Verbundmaterials durch das unmittelbar anschließende Einsetzen und Verschweißen des Ausgießelementes nicht in die Packung gelangen kann. Dies wiederum hat einen geringeren Reinigungsaufwand zur Folge.

Die Erfindung wird nachfolgend anhand einer lediglich ein bevorzugtes Ausführungsbeispiel darstellenden Zeichnung näher erläutert. In der Zeichnung zeigen:
- Fig. 1: den Aufbau der erfindungsgemäßen Vorrichtung in schematischer Seitenansicht und
- Fig. 2A bis 2H: die einzelnen beim Applizieren der Ausgießelemente ablaufenden Verfahrensschritte in kontinuierlicher Abfolge.

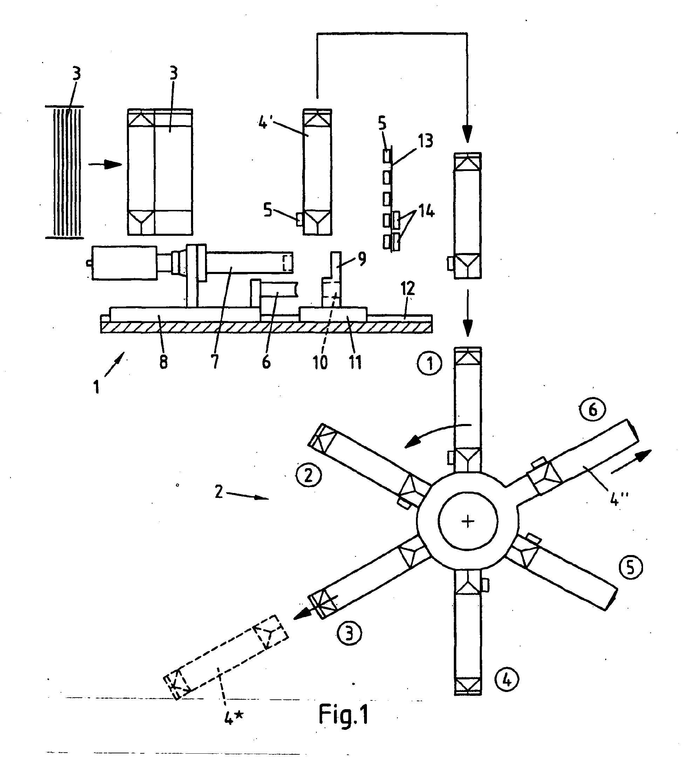

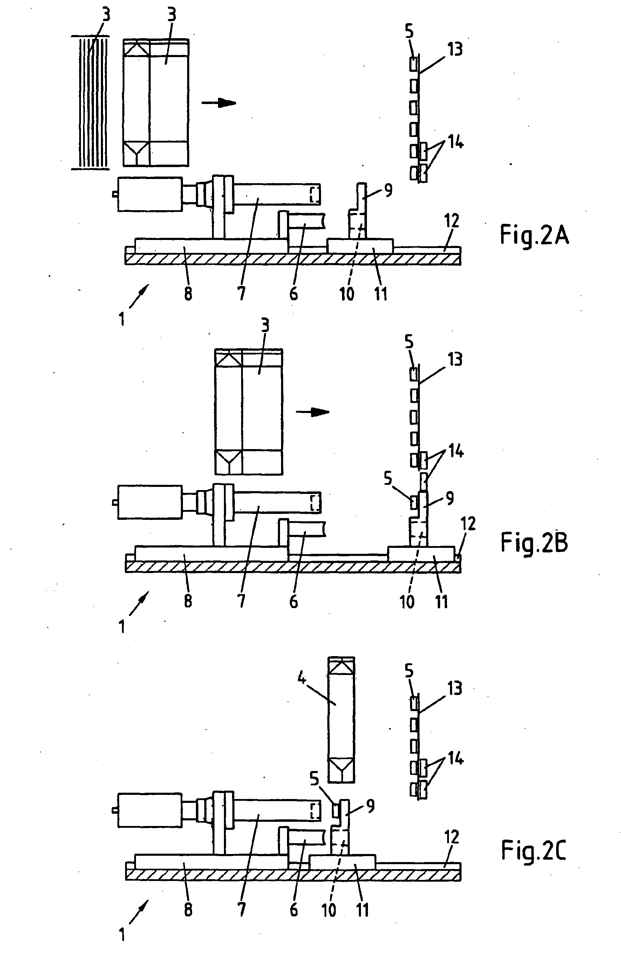

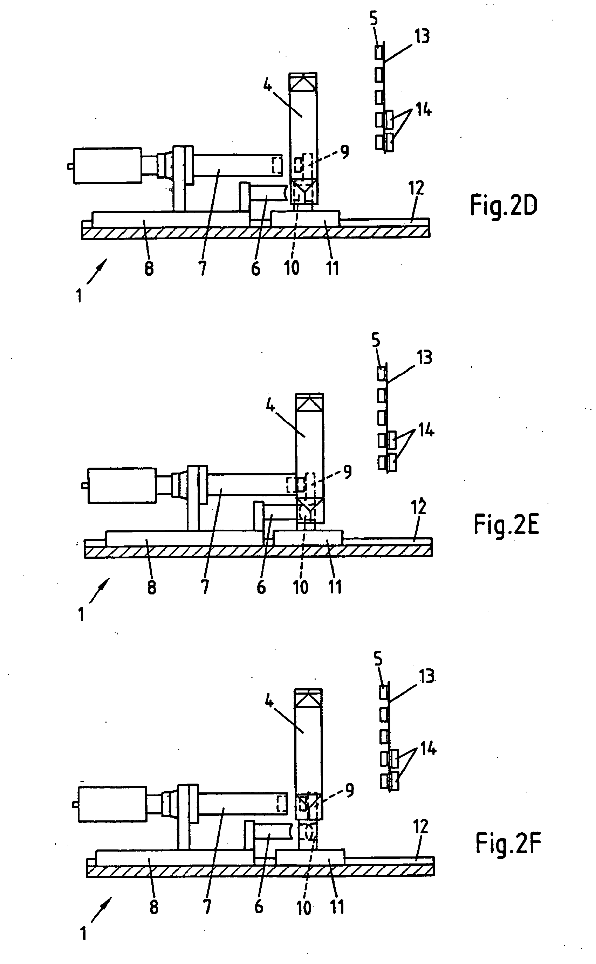

In Fig. 1 ist in schematischer Seitenansicht der grundsätzliche Aufbau einer erfindungsgemäßen Vorrichtung zum Applizieren von Ausgießelementen an Packungen dargestellt. Dabei ist mit 1 die kombinierte Stanz- und Applikationseinheit und mit 2 ein nachgeschaltetes Dornrad bezeichnet. In bekannter Weise werden flachgefaltete Packungsmäntel 3 in einem Magazin zugeführt und jeweils der am Ende befindliche Packungsmantel vereinzelt und zu einem Schlauch 4 mit rechteckigem Querschnitt aufgefaltet wie in den Fig. 2A bis C dargestellt.

Bevor nun die Applikation von gleichfalls stetig zugeführten Ausgießelementen 5 erfolgen kann, muss der aufgefaltete Schlauch 4 zunächst zur Aufnahme eines solchen Ausgießelementes 5 mit einer entsprechenden Stanzöffnung versehen werden. Dazu dient im dargestellten und insoweit bevorzugten Ausführungsbeispiel ein Stanzwerkzeug 6, welches unterhalb eines Schweißwerkzeuges angeordnet ist. Im dargestellten und insoweit bevorzugten Ausführungsbeispiel ist das Schweißwerkzeug als eine für den späteren Ultraschall-Schweißvorgang benötigte Sonotrode 7 gemeinsam mit dem Stanzwerkzeug 6 auf einem gemeinsamen Schlitten 8 angeordnet. Dieser Schlitten 8 ist linear verfahrbar.

Wie weiter unten im einzelnen ausgeführt, dient eine Zuführeinrichtung 9 zur Aufnahme eines einzelnen Ausgießelementes 5 und ist gleichzeitig als Amboss der bevorzugt verwendeten Ultraschall-Schweißeinheit ausgebildet. Unterhalb dieser Zuführeinrichtung 9 befindet sich eine entsprechend dem Stanzwerkzeug 6 ausgebildete Matrize 10 zur Durchführung des eigentlichen Stanzvorganges. Die Zuführeinrichtung 9 und die Matrize 10 sind wiederum gemeinsam, bevorzugt einstückig, auf einem Träger 11 angeordnet, welcher wiederum entlang einer Schiene 12, zweckmäßigerweise derselben Schiene für den Schlitten 8, linear verfahrbar ist.

Zur Zuführung der einzelnen Ausgießelemente dient eine nur schematisch dargestellte Zuführschiene 13, die in einem wechselseitig arbeitenden Klemmelement 14 endet, um die einzelne Entnahme von Ausgießelementen 5 durch die Zuführeinrichtung 9 zu bewerkstelligen.

Die eigentliche Verfahrensabfolge ist nachfolgend in den Fig. 2A bis 2H näher beschrieben. In Fig. 2A wird der vereinzelte Packungsmantel 3 aufgefaltet, gleichzeitig fährt der Träger 11 nach rechts in eine Stellung unterhalb der Zuführschiene 13, wie in Fig. 2B dargestellt. Dort erfolgt mittels des Klemmelementes 14 eine Übergabe eines Ausgießelementes 5 an die Zuführeinrichtung 9. In Fig. 2C fährt der Träger 11 mit dem Ausgießelement 5 unter den nun vollständig aufgefalteten Schlauch 4. In dieser Stellung senkt sich der aufgefaltete Schlauch 4 so weit ab, bis die auf dem Träger 11 befindliche Matrize sich im Inneren des Schlauches befindet, wie in Fig. 2D dargestellt. Anschließend wird durch lineare Bewegung des Schlittens 8 auf der Schiene 12 in Richtung des Schlauches 4 der Stanzvorgang durchgeführt, indem das Stanzwerkzeug 6 sich in die Matrize 10 hinein- und hinausbewegt.

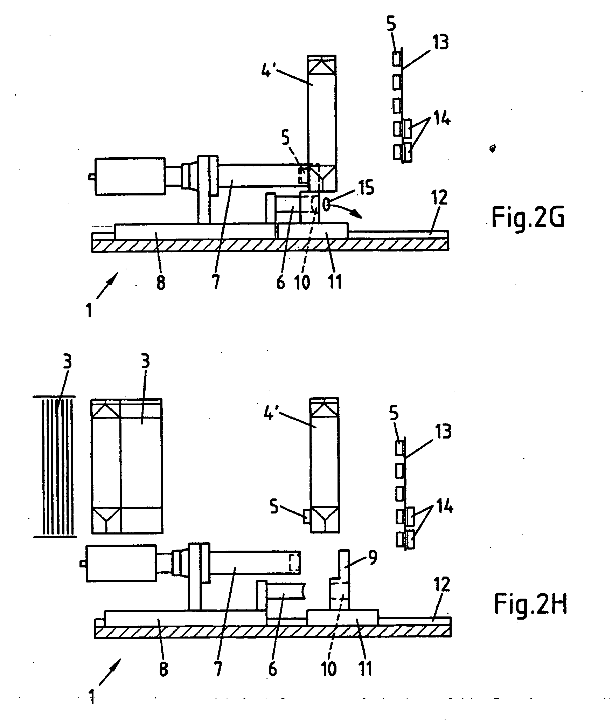

Nach dem Entfernen des Stanzwerkzeuges 6 aus der Matrize 10 wird der Schlauch 4 so weit angehoben, bis sich die Stanzöffnung in Höhe des von der Zuführeinheit 9 aufgenommenen Ausgießelementes 5 befindet, wie in Fig. 2F dargestellt. In Fig. 2G ist nun dargestellt, dass die einen Hohlraum zur Aufnahme des Ausgießelementes 5 aufweisende Sonotrode 7 und die als Amboss ausgebildete Zuführeinrichtung 9 aufeinander zufahren, um das Ausgießelement 5 in die Stanzöffnung des Schlauches 4 hineinzubewegen und unmittelbar anschließend den Schweißvorgang durchführen zu können. Durch das Verfahren des Ambosses in Richtung der Sonotrode 7 und dem anschließenden Hub von Sonotrode 7 und Stanzwerkzeug 6 dringt der Stempel des Stanzwerkzeuges 6 tiefer in die Matrize 10 ein und wirft den Stanzling 15 aus, wie in Fig. 2G dargestellt. Durch dieses "Zwangsauswerfen" ist das Entfernen des Stanzlings 15, welches sich bei älteren Konstruktionen häufig als schwierig erwies, nun auf jeden Fall sichergestellt.

Nach dem Auseinanderfahren von Schlitten 8 und Träger 11 ist der eigentliche Applikationsvorgang beendet und der mit einem Ausgießelement 5 versehene und nun als 4' bezeichnete Schlauch wieder frei und kann nach oben entfernt werden (Fig. 2H). Diese Stellung der erfindungsgemäßen Vorrichtung entspricht wieder der Stellung gemäß Fig. 2A, so dass der nächste Applikationsvorgang beginnen kann.

Anschließend erfolgt eine Übergabe des Schlauches 4' mit dem Kopfbereich voran auf einen Dorn des Dornrades 2, auf dem der Packungsboden hergestellt wird. Dabei verlässt der Schlauch 4' die Ebene seiner Fertigungslinie nicht, so dass auch entsprechend mehrere erfindungsgemäße Vorrichtungen parallel angeordnet sein können.

Da niemals auszuschließen ist, dass ein Ausgießelement 5 gar nicht oder nicht ordnungsgemäß mit dem Schlauch 4 verbunden ist, kann eine freie Station ② des Dornrades 2 zum Detektieren solcher Ausschussware genutzt werden. In einer nächsten Station ③ kann ein Ausschleusen solcher Ausschuss-Schläuche 4* erfolgen, wie gestrichelt dargestellt ist. Auf diese Weise ist zuverlässig ausgeschlossen, dass sich nicht ordnungsgemäß mit einem Ausgießelement versehene Schläuche 4* der Packungsbodenbildung oder gar der anschließenden Füllung zugeführt werden.

In bekannter Weise werden in den Stationen ④ und ⑤ die Packungsböden gefaltet und versiegelt. Schließlich können die nunmehr unten geschlossenen Packungen 4" von der letzten Station ⑥ in Richtung des nicht näher bezeichneten Pfeiles an eine sich anschließende (nicht dargestellte) Füllmaschine übergeben werden.

Das erfindungsgemäße Verfahren und die erfindungsgemäße Vorrichtung sorgen auf konstruktiv einfache Weise für eine zuverlässige Applikation von Ausgießelementen an Packungsschläuche, wobei nur sehr wenige bewegte Massen notwendig sind, um eine entsprechend hohe Taktzahl bei der Packungsfertigung zu erzielen.

## Patentansprüche

1. Verfahren zum Applizieren von Ausgießelementen an Packungen, insbesondere an quaderförmigen Mehrschichtverbundpackungen für Flüssigkeiten, wobei flachgefaltete Packungsmäntel (3) vereinzelt, ggf. vorgefaltet und zu jeweils einem rechteckigen Schlauch (4) aufgefaltet werden, wobei im Kopfbereich der späteren Packung jeweils eine Öffnung zur Aufnahme eines Ausgießelementes (5) in die aufgefalteten Schläuche (4) gestanzt und jeder Schlauch (4) mit einem Ausgießelement (5) versehen wird und wobei anschließend der Packungsboden hergestellt wird und abschließend das Füllen sowie Verschließen der fertigen Packung erfolgt, **gekennzeichnet durch** die folgenden Schritte:
- Auffalten des Packungsmantels (3) zu einem Schlauch (4),
- Übergabe eines Ausgießelementes (5) an eine Zuführeinrichtung (9),
- horizontales Verfahren der Zuführeinrichtung (9) unter den Schlauch (4),
- Absenken des Schlauches (4) um die Zuführeinrichtung (9) herum,
- Ausstanzen einer Öffnung für das Ausgießelement (5) **durch** horizontales Verfahren eines ein Stanzwerkzeug (6) und ein Schweißwerkzeug aufweisenden Schlittens (8),
- Anheben des Schlauches (4), bis die Stanzöffnung sich in Höhe des von der Zuführeinrichtung (9) aufgenommenen Ausgießelementes (5) befindet,
- Applizieren des Ausgießelementes (5) **durch** erneutes horizontales Verfahren des Schweißwerkzeuges und
- Übergabe des mit Ausgießelement (5) versehenen Schlauches (4') an ein Dornrad (2).

2. Verfahren nach Anspruch 1,
**dadurch gekennzeichnet, dass**
die flachgefalteten Packungsmäntel mit nach unten weisendem Kopfbereich zugeführt werden.

3. Verfahren nach Anspruch 1 oder 2,
**dadurch gekennzeichnet, dass**
die Ausgießelemente (5) taktweise über eine Zuführschiene (13) und ein Klemmelement (14) an die Zuführeinrichtung (9) übergeben werden.

4. Verfahren nach einem der Ansprüche 1 bis 3,
**dadurch gekennzeichnet, dass**
die mit dem Ausgießelement (5) versehenen Schläuche (4') mit ihrem Kopfbereich voran an ein Dornrad (2) zur Herstellung des Packungsbodens übergeben werden.

5. Verfahren nach einem der Ansprüche 1 bis 4,
**dadurch gekennzeichnet, dass**
als Schweißverfahren zur Applikation des Ausgießelementes (5) das Ultraschallschweißen eingesetzt wird.

6. Verfahren nach einem der Ansprüche 1 bis 4,
**dadurch gekennzeichnet, dass**
als Schweißverfahren zur Applikation des Ausgießelementes (5) das Hochfrequenzschweißen eingesetzt wird.

7. Vorrichtung zum Applizieren von Ausgießelementen an Packungen, insbesondere an quaderförmigen Mehrschichtverbundpackungen für Flüssigkeiten, mit einer Stanzstation zum Stanzen einer Öffnung zur Aufnahme eines Ausgießelementes (5) in einen zugeführten aufgefalteten Schlauch (4) und mit einer Station zum Applizieren der Ausgießelemente (5) in die in der Stanzstation hergestellten Öffnungen, wobei das Applizieren der Ausgießelemente (5) mittels Schweißen erfolgt, mit einer Station zum Herstellen des Packungsbodens sowie mit gegebenenfalls weiteren Stationen zum Füllen und Verschließen der fertigen Packung,
**gekennzeichnet durch**
eine kombinierte Stanz- und Applikationseinheit (1), bei der sowohl das Stanzwerkzeug (6) als auch das Schweißwerkzeug der Schweißeinrichtung auf einem gemeinsamen Schlitten (8) angeordnet sind und **durch** eine Zuführeinrichtung (9) für das Ausgießelement (5), welches auf einem Träger (11) angeordnet ist.

8. Vorrichtung nach Anspruch 7,
**dadurch gekennzeichnet, dass**
der Schlitten (8) und/oder der Träger (11) horizontal verfahrbar sind.

9. Vorrichtung nach Anspruch 7 oder 8,
**dadurch gekennzeichnet, dass**
die Zuführeinrichtung (9) für das Ausgießelement (5) gleichzeitig als Gegenwerkzeug sowohl für die Schweißeinrichtung als auch für das Stanzwerkzeug (6) ausgebildet ist.

10. Vorrichtung nach Anspruch 9,
**dadurch gekennzeichnet, dass**
die Zuführeinrichtung (9) für das Ausgießelement (5) und die Matrize (10) für das Stanzwerkzeug (6) einstückig mit dem gemeinsamen Träger (11) verbunden sind.

11. Vorrichtung nach einem der Ansprüche 7 bis 10,
**dadurch gekennzeichnet, dass**
der Schlitten (8) und der Träger (11) auf einer gemeinsamen Schiene (12) verfahrbar angeordnet sind.

## Claims

1. Process for applying pouring elements onto cartons, in particular onto parallelepiped multi-layer composite cartons for liquids, wherein flat-folded carton mantles (3) are separated, where appropriate pre-folded and in each case unfolded to form a rectangular tube (4) wherein, in the head region of the subsequent carton, a hole for receiving a pouring element (5) is punched in each of the unfolded tubes (4) and each tube (4) is provided with a pouring element (5) and wherein the carton base is then produced and finally the finished carton is filled and sealed,
**characterized by** the following steps:
- unfolding of the carton mantle (3) to form a tube (4),
- transfer of a pouring element (5) to a feed unit (9),
- horizontal movement of the feed unit (9) under the tube (4),
- lowering of the tube (4) around the feed unit (9),
- punching of a hole for the pouring element (5) by horizontal movement of a slide (8) having a punch tool (6) and a welding tool,
- raising of the tube (4) until the punched hole is in line with the pouring element (5) received by the feed unit (9),
- application of the pouring element (5) by renewed horizontal movement of the welding tool and
- transfer of the tube (4') provided with pouring element (5) to a pin wheel (2).

2. Process according to Claim 1,
**characterized in that** the flat-folded carton mantles are delivered with the head region pointing downwards.

3. Process according to Claim 1 or Claim 2,
**characterized in that** the pouring elements (5) are cyclically transferred via a feed rail (13) and a clamping element (14) to the feed unit (9).

4. Process according to any one of claims 1 to 3,
**characterized in that** the tubes (4') provided with the pouring element (5) are transferred with their head region forwards to a pin wheel (2) for producing the carton base.

5. Process according to any one of claims 1 to 4,
**characterized in that** ultrasonic welding is used as a welding method for application of the pouring element (5).

6. Process according to any one of claims 1 to 4,
**characterized in that** high frequency welding is used as a welding method for application of the pouring element (5).

7. Device for applying pouring elements onto cartons, in particular onto parallelepiped multi-layer composite cartons for liquids, with a punch station for punching a hole for receiving a pouring element (5) in a delivered unfolded tube (4) and with a station for applying the pouring elements (5) into the holes produced in the punch station, wherein the pouring elements (5) are applied by means of welding, with a station for producing the carton base as well as with possible further stations for filling and sealing the finished carton,
**characterized by** a combined punch and application unit (1), in which both the punch tool (6) and the welding tool of the welding unit are disposed on a common slide (8), and by a feed unit (9) for the pouring element (5), which is disposed on a carrier (11).

8. Device according to Claim 7,
**characterized in that** the slide (8) and/or the carrier (11) can be moved horizontally.

9. Device according to Claim 7 or Claim 8,
**characterized in that** the feed unit (9) for the pouring element (5) at the same time is formed as counter-tool both for the welding unit and for the punch tool (6).

10. Device according to Claim 9,
**characterized in that** the feed unit (9) for the pouring element (5) and the die (10) for the punch tool (6) are integrally connected to the common carrier (11).

11. Device according to any one of claims 7 to 10,
**characterized in that** the slide (8) and the carrier (11) are movably arranged on a common rail (12).

## Revendications

1. Procédé pour l'application d'éléments verseurs à des emballages, en particulier à des emballages en matériau composite multicouches, en forme de parallélépipèdes, pour des liquides, des enveloppes d'emballages (3) pliées à plat, qui sont préalablement pliés, le cas échéant, individuellement, et déployés chacun pour former un tube rectangulaire, une ouverture étant estampée dans la région de la tête de chacun des futurs emballages, pour la mise en place d'un élément verseur (5) dans les tubes (4) déployés, et chaque tube (4) étant pourvu d'un élément verseur (5), et le fond de l'emballage étant ensuite réalisé, et le remplissage, ainsi que la fermeture de l'emballage terminé étant finalement exécutés, **caractérisé par** les étapes suivantes :
- déploiement de l'enveloppe de l'emballage (3) pour en un tube (4),
- délivrance d'un élément verseur (5) à un dispositif d'approvisionnement (9),
- déplacement horizontal du dispositif d'approvisionnement (9) sous le tube (4),
- abaissement du tube (4) à proximité du dispositif d'alimentation (9),
- estampage d'une ouverture pour l'élément verseur (5) par déplacement horizontal d'un chariot (8), qui présente un l'outil d'estampage (6) et un outil de soudage,
- soulèvement du tube (4) jusqu'à ce que l'ouverture estampée se trouve à la hauteur de l'élément verseur (5) pris en charge par le dispositif d'approvisionnement (9),
- application de l'élément verseur (5) par nouveau déplacement horizontal de l'outil de soudage, et
- délivrance du tube (4') pourvu d'un élément verseur (5) à une roue à mandrin (2).

2. Procédé selon la revendication 1, **caractérisé en ce que** les enveloppes des emballages pliés à plat sont conduites avec la tête orientée vers le bas.

3. Procédé selon revendication 1 ou 2, **caractérisé en ce que** les éléments verseurs (5) sont délivrés rythmiquement au dispositif d'approvisionnement (9), par l'intermédiaire d'un rail d'amenée (13) et d'un élément de serrage (14).

4. Procédés selon l'une des revendications 1 à 3, **caractérisé en ce que** les tubes (4'), pourvus de l'élément verseur (5), sont délivrés, la tête en avant, à une roues à mandrins (2) pour la réalisation du fond.

5. Procédé selon l'une des revendications 1 à 4, **caractérisé en ce que** l'on recourt à un soudage par ultrasons comme procédé de soudage pour l'application de l'élément verseur (5).

6. Procédé selon l'une des revendications 1 à 4, **caractérisé en ce que** l'on recourt à un soudage à haute fréquence comme procédé de soudage pour l'application de l'élément verseur (5).

7. Dispositif pour l'application d'éléments verseurs à des emballages, en particulier à des emballages en matériau composite à multicouches, en forme de parallélépipèdes, pour des liquides, avec une station d'estampage pour l'estampage d'une ouverture, destinée à recevoir un élément verseur (5) dans un tube (4), qui est amené, déployé, et avec une station pour l'application de l'élément verseur (5) dans les ouvertures réalisées dans la station d'estampage, l'application des éléments verseur (5) étant effectuée par soudage, avec une station pour la réalisation du fond de l'emballage, ainsi qu'avec, le cas échéant, d'autres stations pour le remplissage et la fermeture de l'emballage terminé,
**caractérisé par** une unité d'estampage et d'application combinés (1), dans laquelle, aussi bien l'outil d'estampage (6) que l'outil de soudage du dispositif de soudage sont installés sur un chariot (8) commun, et par un dispositif d'approvisionnement (9) en éléments verseurs (5), qui est disposée sur un support (11).

8. Dispositif selon la revendication 7, **caractérisé en ce que** le chariot (8) et/ou le support (11) peuvent être déplacés horizontalement.

9. Dispositif selon revendication 7 ou 8, **caractérisé en ce que** le dispositif d'alimentation (9) pour l'élément verseur (5) est réalisé simultanément en tant que contre-outil, aussi bien pour le dispositif de soudage que pour l'outil d'estampage (6).

10. Dispositif selon la revendication 9, **caractérisé en ce que** le dispositif d'approvisionnement (9) pour les éléments verseurs (5) et la matrice (10) pour l'outil d'estampage (6) sont reliés d'une pièce au support commun (11).

11. Dispositif selon l'une des revendications 7 à 10, **caractérisé en ce que** le chariot (8) et le support (11) sont disposés déplaçables sur un rail (12) commun.
